# EUROPEAN PATENT SPECIFICATION

(11) **EP 2 611 287 B1**
(45) Date of publication and mention of the grant of the patent: **12.10.2016**
(21) Application number: 11822178.7
(22) Date of filing: 25.08.2011
(51) Int. Cl.: A01K 61/00, A01K 61/02

(54) **DEVICE FOR HOLDING AND POSITIONING EQUIPMENT AT - AND METHOD FOR FEEDING FISH IN - A CAGE.**
VORRICHTUNG ZUM HALTEN UND POSITIONIEREN EINER AUSRÜSTUNG ZUM FÜTTERN VON FISCHEN IN EINEM KÄFIG
DISPOSITIF POUR MAINTENIR ET POSITIONNER UN ÉQUIPEMENT AU NIVEAU D'UNE CAGE À POISSON ET PROCÉDÉ POUR NOURRIR DU POISSON DANS LA CAGE

(30) Priority: 31.08.2010 NO 20101207
(43) Date of publication of application: 10.07.2013
(73) Proprietor: Skagen, Aage, 7540 Kläbu (NO)
(72) Inventor: Skagen, Aage, 7540 Kläbu (NO)
(74) Representative: Curo AS
(86) International application number: PCT/NO2011/000234
(87) International publication number: WO 2012/030226

(56) References cited:
- WO-A1-2009/008733
- WO-A2-2010/015852
- CN-U- 2 108 427
- JP-A- H1 056 912
- NO-B1- 300 401
- US-A- 5 975 021

## Description

The present invention concerns fish cages used for fish farming mainly salmon farming. More specifically the present invention concerns a device for holding and positioning equipment at the fish cages which have mainly circular horizontal cross-sections, as well as a method for feeding fish using said device.

### Background

Traditionally fish in fish cages are fed by means of feed dispensers arranged centrally in the cage and which is remotely controlled, preferably with automatically timed feed intervals. Surveillance cameras are preferably arranged in the fish cage so that an operator can monitor everything and visually determine to what extent the fish eat.

When there is a stream in the water, and possibly wind, parts of the fodder may float and/ or blow sideways through the fish cage and get lost through the side walls of the cage in the direction of the stream and/ or the wind. To what extent this actually happens will vary with the conditions and with the localization of the fish cage in the sea.

The smallest fish which has most recently been transferred to the fish cage from a smaller tank, will for a time period move along the periphery of the cage and to little extent seek towards the center of the cage. They will to a little extent receive fodder from the dispenser and an operator will typically feed them by hand with fodder carried manually to each fish cage several times each day. This is very labour-demanding and in bad weather it is not a work without safety hazards.

There is a need for frequent check of the seine in order to detect possible damages with the consequence that fish will escape, such check being difficult without hiring divers for inspection.

Over the fish cages bird nets are arranged to keep birds away, especially birds of prey, from the fish cages. According to the known solutions, a net is outstretched from a central "tower" floating in the cage. This tower competes with the feed dispenser of having the most central position in the cage, which implies that none of them gets the optimal position. In practice this means that parts of the bird net is immersed in the water with the possible consequence of harming the fish. In addition, the tower is an obstacle for fodder from the feed dispenser, meaning that the fodder is not optimally spread, but also that some of the fodder is being crushed and not eaten.

When a fish cage is to be cleaned, this work typically requires use of a particularly equipped ROV, remotely controlled from above. This is an operation that disturbs the fish and that is rather expensive. It would be a distinctive benefit if expensive equipment which must be brought to and temporarily placed in the fish cage for cleaning the wall(s) and the bottom of the fish cage, could be avoided.

JP H10 56912 A discloses a device for holding and positioning equipment at a fish cage according to the preamble of independent claim 1. WO 2009/008733 A1 discloses a method of feeding fish in a fish cage having a circular cross-section, using a feed dispenser that slings fodder pellets in a circular pattern from the feed dispenser's position.

### Objectives

It is thus an object of the present invention to provide equipment that simplifies the operation of fish cages and reduces the need for labour hours, and which provides improved safety and improved fish welfare.

It is a further object to provide equipment that reduces loss of fodder, thereby improving the economy of the operation of fish cages while simultaneously avoiding undesired feeding of wild fish.

It is a further object to provide equipment that simplifies control of the seine with respect to damages, to early detect risk of fish escaping the cage.

### The present invention

The above mentioned objects are achieved by the device according to the present invention as defined by claim 1.

According to another aspect, the present invention concerns a method for feeding fish in fish cage as defined by claim 17.

Preferred embodiments of the invention are disclosed by the dependent claims.

The present invention has a number of advantages over the prior art technology in this field. One of the major advantages is that the feeding can take place with a much higher degree of control, so that loss of fodder is eliminated or significantly reduced. The present invention also allows feeding locally near the cage wall without requiring personnel out on the site to feed manually, since the feed dispenser can be positioned over any point of the cage. Furthermore the conflict between the bird net tower and the feed dispenser is completely eliminated due to the fact that the bird net is supported by a skeleton that is supported centrally by the crossbar, so that the bird net is positioned above the crossbar over the entire fish cage while the feed dispenser is suspended from and positioned below the crossbar. Another advantage is that equipment for cleaning the fish cage can be suspended and controlled from the crossbar in a manner by which the side wall as well as the bottom wall of the seine of the fish cage can be reached. The need for an ROV for cleaning is thus eliminated. Whether or not the cleaning equipment shall be permanently arranged in each fish cage or moved from cage to cage, is a decision for the individual fish farmer.

The device will furthermore, by moving cameras about in the fish cage, allow monitoring of the condition of the seine and detect tears therein, allowing actions to be taken in order to prevent fish from escaping.

The invention and its use is described in more detail below with reference to the accompanying drawings, where:
Figure 1 is a schematic top view of a fish cage comprising the present invention,
Figure 2a is a side sectional view of an element of the device according to the present invention.
Figure 2b shows enlarged a detail of a variant of the element shown in Fig. 2a.
Figure 3 is a schematic side sectional view of some parts of the device of the present invention.
Figure 4 is a side sectional view of a number of elements according to the present invention.
Figure 5 shows enlarged sections of some parts of the device according to the present invention.
Figure 6 is a schematic top view of further elements of the device according to the present invention.
Figure 7 shows schematically some further elements of the device according to the present invention.

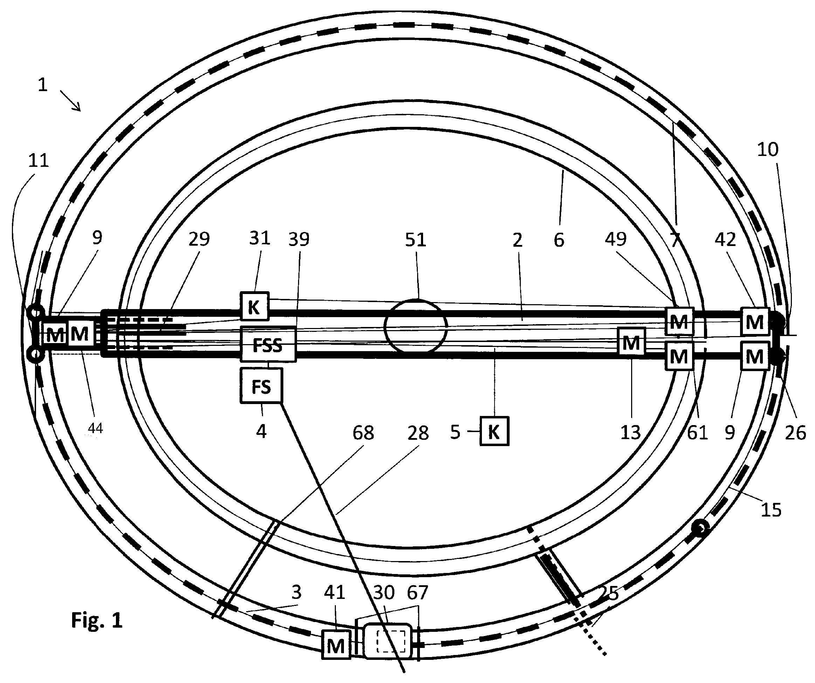

Figure 1 is a top view of a fish cage 4 having mainly circular horizontal cross-section. As shown in the Figure the fish cage is somewhat elliptical, which may also be the case for a fish cage lying in the sea during changing weather conditions. Across - or diametrically over - the fish cage a crossbar 2 is arranged, terminated at both ends by a support structure 10 resp. 11. The support structure 10, 11 is arranged to run on rails 3 (indicated with dotted line) which are arranged continuous along outer buoyant ring 7. The fish cage also comprises an inner buoyant ring 6 which holds the seine 8 constituting the side wall and the bottom wall of the fish cage. The two buoyant rings 6 and 7 are joined together and dimensioned in such a way that they provide good and sufficient buoyancy under all conditions. Use of two buoyant rings joined together is not an element particular for the present invention.

It should be emphasized that the size relations between the elements can be severely distorted in the drawings as compared to reality. The distance between inner 6 and outer buoyant ring 7 is thus no more than a couple of meters while the diameter of the mainly circular area limited by the inner buoyant ring typically is 50 meters.

From the crossbar, at its lower side, a feed dispenser 4 is suspended, arranged for movement along the crossbar 2 over mainly the entire extension of the latter by means of a feed dispenser holder 39 and a motor 13. The feed dispenser 4 is connected to a supply hose 28 for periodic supply of fodder.

From the crossbar 2 an underwater camera 5 is also suspended, said camera being movable along the crossbar 2, independent of the movement and position of the feed dispenser 4, by means of a separate motor 61. The underwater camera 5 may thus be positioned near the feed dispenser or far away from the feed dispenser, according to the need. It is to be understood if not pointed out specifically, that when a motor is positioned at a distance from the element it is intended to affect, there is typically a pull-wire between the motor and the element in question, this being the feed dispenser, a camera or other equipment. An alternative to a pull-wire can be the use of direct connected motors on feed dispenser, camera, or other equipment. The underwater camera can be connected via a cable along the bottom of the fish cage and up to a termination box.

Figure 1 also shows a surface camera 31 which similar to the suspension means for the underwater camera, can be moved along the crossbar by means of a separate motor 49. As an alternative the surface camera can be permanently mounted to the feed dispenser 4 which simplifies the construction somewhat, but which also correspondingly reduces the degree of freedom of action.

The crossbar 2 comprising the support structure 10 and 11, constitutes a bridge which always extends diametrically over the fish cage 1, the height of which well exceeds the upper points of attachment for the seine 8 and railing. The crossbar can when desired be rotated above the fish cage by allowing the support structures 10, 11, resting in wheels 26, to travel equal distances controlled by at least one motor 9. To the left in Figure 1 is indicated that the crossbar is extendable or contractable by a telescopic function, one inner arm being rigidly attached to the support structure 11, is received within an outer arm which is rigidly attached to the support structure 10. In figure 1 is also shown a preferably pivotal disc 51 attached to the upper side of the crossbar 2, the purpose of which is to support a bird net holder as described below.

Figure 1 also shows a supply drum 30 for pulling the supply hose 28 thereover, a motor 42 for movement of cleaning tool or other tool, a pull motor 44 with skid function for the pull wire 46, a motor 49 for movement of a surface camera and connective means 68 for the fish cage.

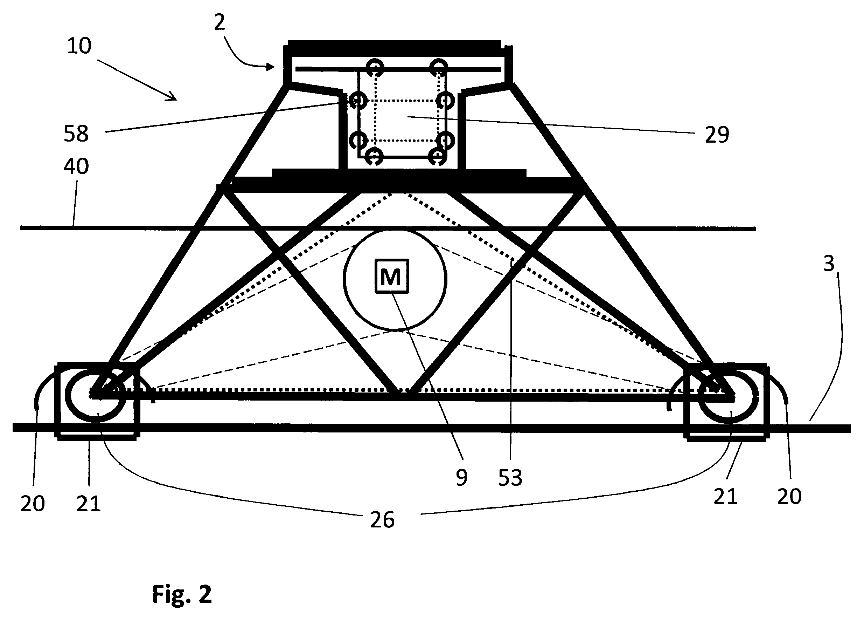

Figure 2 shows schematically a side view of the support structure 10, 11 seen along the radius of the fish cage 1. The support structure 10,11 has in the shown embodiment two wheels each, one at each end, resting against the rail. In addition the support structure has two "clamps" 21 integrated with the wheels 26, said clamps being designed to prevent any upwards movement of the support structure 10, 11 due to external influences. The clamp may have the form of a claw that grips round and below the "flange" of the rail 3 when the latter has a T profile. In the upper part of Figure 2 a section of the crossbar is indicated, extending into the paper plane (along the radius of the fish cage), and ball bearings 58 for allowing the inner arm 29 of the crossbar 2 to be pulled out from the outer arm of the crossbar is also indicated. In Figure 2 scrapers 20 for the removal of ice and other possible foreign matters on the rail 3, are shown in front of the wheels 26. The motor 9 shown in Figure 2, is a motor for movement / rotation of the crossbar 2.

A safety chain 53 is arranged in connection to the crossbar, including both of the support structures 10, 11 and is by means of safety clamps 21 secured to the rail 3, as an extra safety measure in case of extreme situations (like an external influence in the form of a collision or the like), thus preventing the crossbarfrom falling into the fish cage even in the unlikely occurrence that it should break.

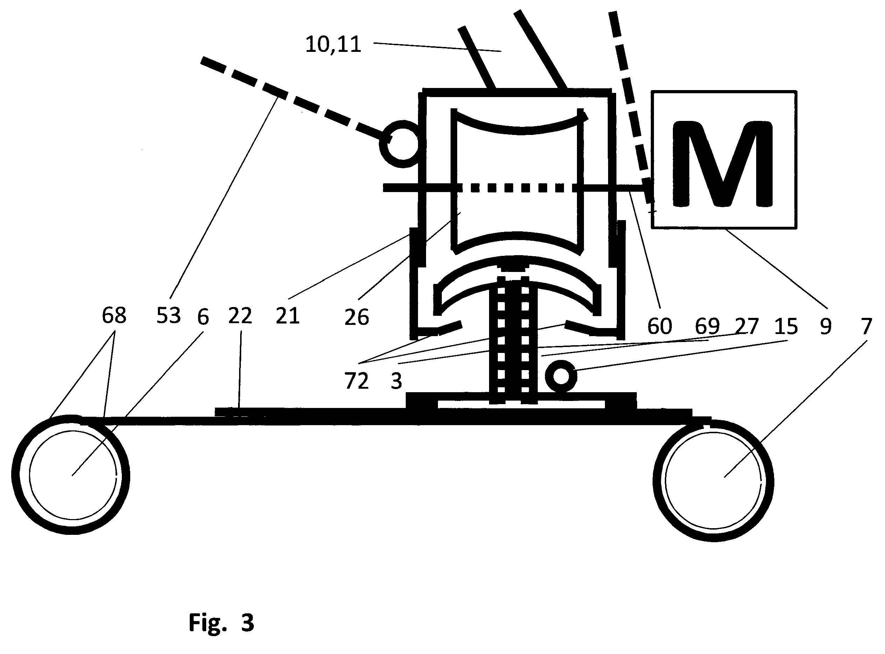

It is hereby referred to Figure 3 which shows a wheel 26 enlarged. The clamp 21 in Figure 3 is furthermore provided with horizontal stop blocks 72 that is positioned below the mainly horizontal part of the T shaped rail 3. The wheel 26 and the T part of the rail 3 are shown with adapted curved surfaces which provide an optimal contact between wheel and rail when waves alternatingly raise and lower different sides of the fish cage. Figure 3 also shows wheel axis 60 and a reinforced attachment 22 intended to distribute the weight from the rail 3 in such a way that the inner buoyant ring as well as the outer buoyant ring 7 contributes to support the weight applied to the rail 3 from the crossbar 2. A distance wire 15 ensures that the support structures 10, 11 are spaced evenly apart at all times, measured along the periphery (circumference) of the fish cage 1.

A movable connecting joint 27 and use of a connecting bolt 69 allows that rails 3 at all times can adapt to movement of the buoyant rings 6 and 7 of the fish cage 1. A universal attachment connection 68 forms a platform that allows use of the device on most occurring types of fish cages.

Without limiting the present invention to certain sizes, it is not unusual that the diameter of a fish cage is 50 meters and with such a size the distance between the outer wheels 26 of a support structure may be in the magnitude of 7 meters to provide sufficient stability.

With said dimensions there is a need for a certain angular difference between the two wheels 26 in order for these to run well on the rail. With such location and orientation, the wheels 26 will rotate with an axis parallel to the radius of the fish cage at the site of each wheel.

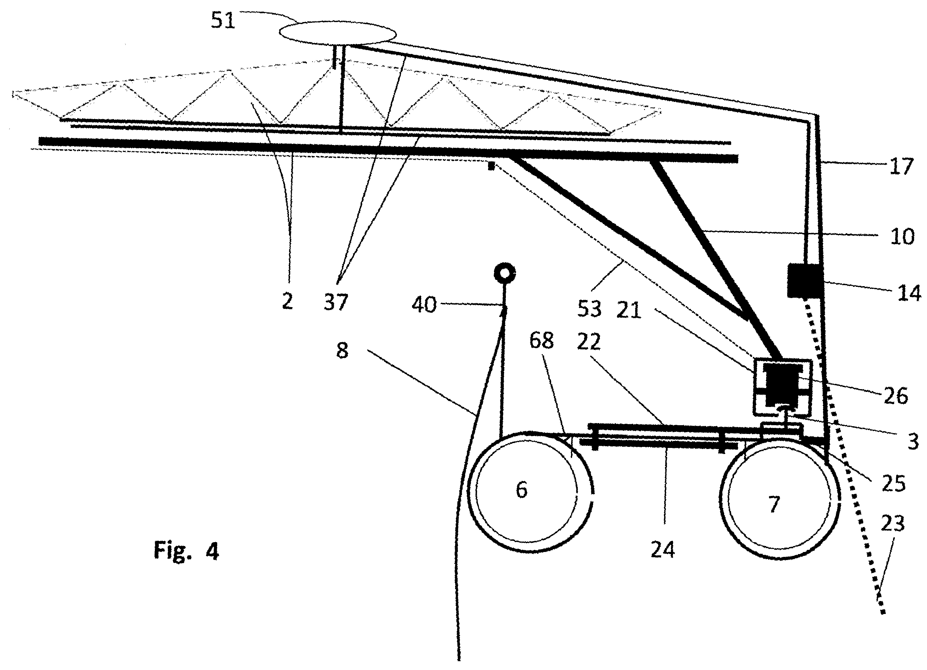

Figure 4 shows, again simplified, a side sectional view of part of the crossbar 2, comprising support structure 10 viewed along the periphery of the fish cage 1, i.e. perpendicular to the view of angle of Figure 2. Inner buoyant ring 6 and outer buoyant ring 7 are both shown as rings having circularly cross-section. These are physically connected with solid connective means 68 which comprises a reinforced attachment 22 intended to also function as a fundament for the rails 3 against which the support structures 10, 11 shall rest. The attachment 22 has counterparts in the form of reinforcement clamps 24 mounted from below. Thus a more robust connection than normal is obtained between the inner and outer ring, the purpose of which being to ensure that the extra weight from the crossbar is shared between the two buoyant rings and not by one ring only. To the inner buoyant ring a hand rail 40 for preventing personnel that performs work on the fish cage from falling into the sea, is shown schematically. To the handrail 40 is indicated that the top of the seine 8 is attached. Like in Figure 2 a wheel 26 surrounded by a clamp 21 is shown. It is an obvious option to make use of also an outer handrail (not shown) in addition to the handrail 40 for an even better protection of personnel with respect to the danger of falling into the sea. Such a handrail can be part of or combined with the holder (skeleton) for the bird net.

It is important that the fundament in the form of attachment 22 against which the rail 3 rests, is strong and stable since the crossbar 2, included support structures 10 and 11, can weigh between 1500 and 2000 kg, half of which is transferred to each of two opposite sides of the fish cage and again distributed to the number of wheels used, typically from two to five wheels on each support structure. Each wheel will then typically carry a weight in the range 150 - 500 kg, while an area of the rail 3 of about 7 meters will have to support a weight of about 750 to 1000 kg.

Figure 4 furthermore shows how the crossbar 2 in addition to comprising the telescopically interacting parts also advantageously comprises a lattice structure, the purpose of which being to provide the crossbar with a sufficient strength, not to become sway-backed over the significant span represented by the diameter of the fish cage.

Figure 4 furthermore shows how a frame in the form of a bird net holder 17 is arranged above and radially outwards of the crossbar 2 and is supported by the latter via the disc 51 at the center of the crossbar. Outside the rail 3 at buoyant ring 7 there is a particular lower attachment 25 for the bird net holder 17. Thus, contrary to the solutions for prior art fish cages, there is with the present invention, no conflict between the positioning of the feed dispenser 4 and the support or holder for a bird net, since the bird net is generally above and outside the crossbar 2 while the feed dispenser is positioned below the crossbar. The feed dispenser 4 may therefore be positioned over any given point within the fish cage at any given point in time, centrally or near any point of the periphery of the fish cage, through a movement comprising a) the angular position of the crossbar (rotation) over the fish cage, and b) the (linear) positioning of the feed dispenser along the crossbar.

Cables 37 from a controlling unit 14 can follow the bird net holder 17 to the center of the crossbar if that is desired. Power supply 23 to the controlling unit is also shown in Figure 4.

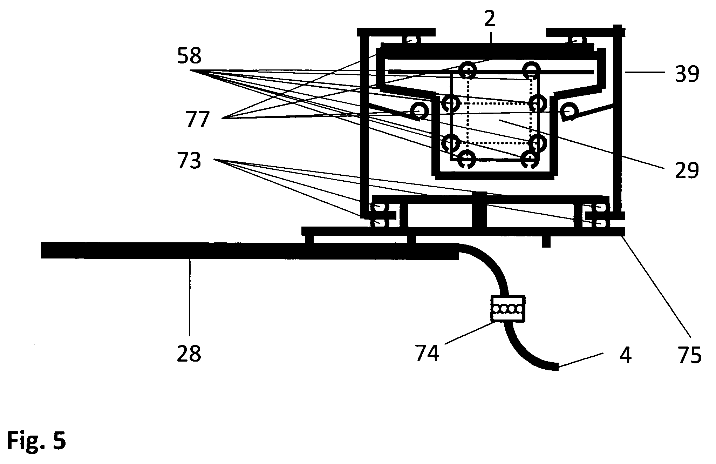

Figure 5 shows how the feed dispenser 4 is suspended from the crossbar 2 so that it is both pivotal and linearly moveable in relation to the crossbar by means of ball bearings 73 and 77. The purpose of pivotal feed dispenser is to allow it to be held in a mainly fixed orientation in relation to the feed supply hose 28 independent of the orientation of the crossbar 2 when the latter is rotated. The point of linear movement is the possibility of moving the feed dispenser 4 to any point over the fish cage in dependence of weather and flow conditions and in dependence of whether the fish to be fed is small or large, as described more in detail below. Figure 5 also shows - as shown in previous Figure - ball bearings 58 allowing the automatically adjustable carrier arm 29 of the crossbar 2 to function as intended. The outer part of the feed dispenser 4 is in the joint 74 arranged to rotate quickly during the dispensing of the fodder to sling it out in a circular area around the feed dispenser. A pivotal disc 75 is the element which together with ball bearings 74 allows the feed dispenser 4 to be rotated 360 degrees around in relation to the holder 39 for the feed dispenser 4.

By "automatic" adjustable carrier arm is understood that the forces applied to the crossbar in its longitudinal direction from the support structures 10, 11, results in a movement out and in respectively of the arm 29, facilitated by the ball bearings 58, so that there can never occur forces of significance along the crossbar and so that the wheels 26 on the support structures 10, 11 can not be pushed or pulled out of the rail 3 as a consequence of the fish cage being oval.

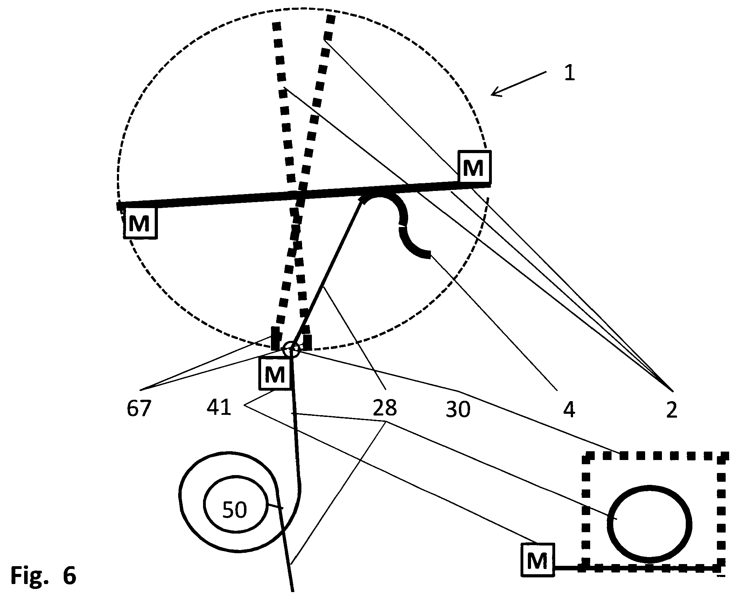

Reference is now made to Figure 6. To obtain the possibility of moving the feed dispenser linearly back and forth while being connected to a feed supply hose 28, it is a requirement that the effective length of the feed supply hose can be adjusted. This may be obtained in several ways, the simplest way being of laying it in a coil 50, typically resting on some kind of reel, allowing a size variation adapted to the size of the fish cage 1, this implies that at the smallest achievable radius of the coil 50 the free length of the feed supply hose 28 between the coil 50 and the feed dispenser 4 is sufficiently long to reach the point furthest away in the fish cage 1 measured from the coil. In addition there must be arrangements for necessary support of the feed supply hose 28 when the effective diameter of the coil increases to the extent required to move the feed dispenser to the point within the fish cage being closest said coil 50 of the feed supply hose 28. For a fish cage with a 50 meters diameter, the coil must be able to take up and give out nearly 50 meters of hose. The hose may however have several turns on a coil, allowing its outer dimension to be reduced. If for instance the feed supply hose has three turns on a reel forming the coil, each turn of the coil needs to give out and take up about 16 meters (3 x 16 = 48) respectively, which changes the diameter of the coil by about 5.1 meters between the extreme points. A separate motor 41 can be arranged in connection to the coil in order not having to dimension the motor 13 connected to the feed dispenser 4 for handling the load related to the movement of the feed supply hose 28. In Figure 6 there are also shown stop points 67 for movement of the crossbar 2.

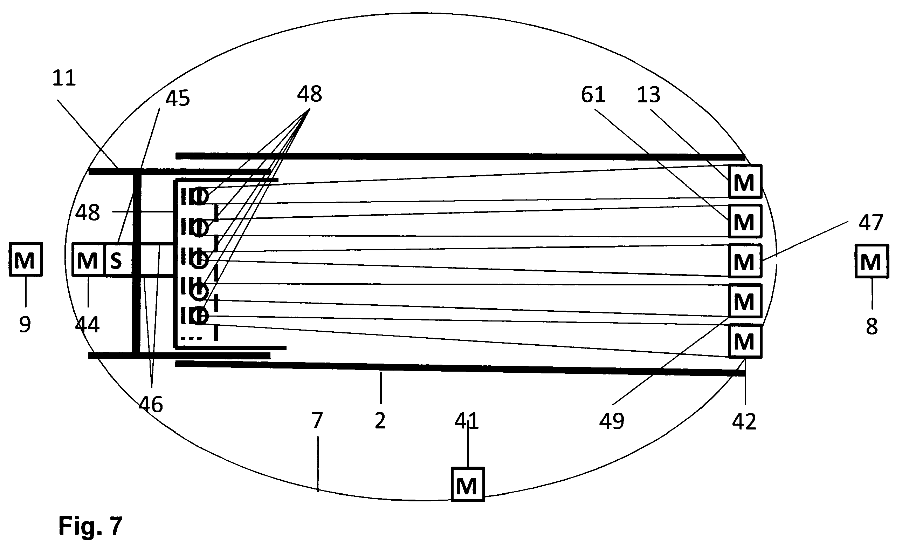

Figure 7 shows elements for automatic maintenance of correct pretension of pull wires, independent of the fish cage being circular or elliptical. The pull wires will always be held tight by means of automatically adjustable pull wire attachment 48, operated by a skid gear 45 and a motor 44.

### Use of the device according to the present invention

When feeding is to be started, the feed dispenser can be positioned in a central position in the fish cage 1.

The underwater camera 5 is positioned near the feed dispenser so that an operator can see the spread of the fodder (pellets) in the water. If a significant deviation is detected due to streams in the water, the crossbar can be rotated so that it becomes parallel with the stream direction. The underwater camera 5 can be moved downstream to allow the operator to see whether all the fodder is eaten or if some of it floats through the seine wall 8 and is lost. If the streams in the water are strong and in particular if it can be observed that parts of the fodder is lost, the feed dispenser 4 will be moved higher upstream until it is ensured that all of the fodder stays in the fish cage 1 long enough to be eaten. In extreme situations the feeding may be halted. During severe wind it will be more convenient to use the surface camera 31 to obtain a best possible verification that feeding can take place without loss.

When feeding is conducted close to the periphery of the fish cage 1, the feed dispenser is moved to the site where the fish is, typically as high upstream as possible, and without dispersing the fodder outside the fish cage, the feeding is then being conducted in that area. Even the surface camera 31 can be used to observe that the fodder is dispersed within the desired area, while the underwater camera - in combination with the present invention -allows the feeding to be optimized in relation to streams in the water at each single feeding process.

Cleaning equipment being suspended from the crossbar 2 in a manner movable along the crossbar in the same manner as the underwater camera and which can be raised and lowered, is able to reach any point of the wall of seine 8 and clean this. The cleaning of the entire seine can be performed by a near 2 times 180 degree turn of the crossbar 2 for a certain vertical level of the cleaning equipment. Thereafter it may be adjusted to a new level and another oppositely directed turn of the crossbar conducted. In this way one may continue until the entire height and periphery of the seine wall has been cleaned. Alternatively the cleaning can be made by a vertical movement of the cleaning equipment at a certain site along the periphery, whereafter the crossbar is turned slightly corresponding to the width of the cleaning area, whereafter a new vertical movement is conducted from the top to the bottom - or vice versa - of the seine has been performed.

Any given point of the bottom of the fish cage can also be reached and cleaned by turning the crossbar 2 and axially moving the cleaning equipment along the crossbar.

The device enables, facilitated by the surface camera and underwater camera, fully remote surveillance of the entire fish cage based on the principles already explained. As mentioned this is particularly important with regard to possible damages to the seine for allowing measures to be taken to prevent farmed fish from escaping to be taken.

The fish can also be monitored and fed facilitated by surface camera 31, so called surface feeding, either by letting the surface camera 31 to follow the feed dispenser 4 or by moving the camera separately. Thus, the user may get a god impression of the fish' appetite.

To conclude the most important functions and advantages obtained by the present inventions are:
i. By reducing the loss of fodder, one reduces the consumption and thereby obtains a more cost effective feeding while sparing the environment. By providing an optimal positioning of the feed dispenser at all times, the fish is fed effectively independent of where it is, especially in the case of small fish which commonly stands along the seine wall, far away from the traditionally, centrally mounted feed dispenser.
ii. li) it allows cleaning of the walls and the bottom of the seine without using ROV.
iii. It allows full surveillance of the entire seine with regard to damages and thereby preventing fish from escaping.

The device according to the present invention also makes possible optimal surface feeding by allowing surface camera 31 as well as underwater camera 5 to follow the feed dispenser 4 and to be positioned straight above and below the point of feeding independent of where in the fish cage that is. Thus the fish' appetite can be visually assessed so that the precision of the feeding process can be further improved. If desired, the surface camera can be arranged to follow the feed dispenser at all times; the feed dispenser and the surface camera can even share a common attachment.

## Claims

1. Device for holding and positioning equipment at a fish cage (1) having mainly circular, horizontal cross-section with a buoyant ring (7) and a seine (8) attached directly or indirectly to the buoyant ring (7), said device comprising a crossbar (2) adapted to be arranged diametrically across the fish cage (1), **characterized in that** the crossbar at each end comprises a support structure (10 resp. 11) equipped with wheels (26) running on a rail (3) adapted to be arranged on the buoyant ring (7) of the fish cage (1), the crossbar (2) being pivotally arranged over the fish cage (1) by simultaneous movement of the support structures (10, 11) along the rail (3), the crossbar (2) being provided with an automatically adjustable bearing arm (29) to compensate for deviations from perfect circular shape of the fish cage (1) when the crossbar (2) is pivoted.

2. Device as claimed in claim 1, **characterized in that** the rail (3) forms a continuous rail track adapted to be attached on the buoyant ring (7), the crossbar (2) comprising two support structures (10, 11) which are arranged to stand diametrically opposite each other on the rail track, each comprising at least two wheels (26), the crossbar also comprising a lattice structure the function of which being to provide strength to the crossbar allowing it to extend over the fish cage without substantial sway-back.

3. Device as claimed in claim 2, **characterized in that** the continuous rail track is adapted to be attached to a connective means (68) of a fish cage via a reinforced attachment (22), said connective means (68) being arranged to connect said buoyant ring (7) to a further, inner buoyant ring (6) of a fish cage..

4. Device as claimed in claim 1, **characterized in that** the crossbar (2) comprises a latticework of light metal provided with attachments for desired equipment.

5. Device as claimed in claim 1, **characterized in that** the crossbar (2) is arranged to be pivoted by motors (9) that powers at least one wheel (26) on each of the support structures (10, 11).

6. Device as claimed in claim 1, **characterized in that** the crossbar (2) is provided with a holder (39) for a feed dispenser (4), the holder (39) having a pivotally attached turning plate (75) which allows the feed dispenser (4) an orientation independent of the orientation of the crossbar (2).

7. Device as claimed in claim 6, **characterized in that** the holder (39) for the feed dispenser (4) is arranged to be moved by a motor (13) and driving gear to any desired point along the crossbar (2), a supply hose (28) for the fodder to the feed dispenser (4) being arranged in a coil (50) outside the fish cage (1).

8. Device as claimed in claim 7, **characterized in that** the coil (50) is adapted to the size of the fish cage (1) and that a particular motor (41) is arranged to assist in pushing out and pulling in the supply hose (28) for the fodder, as the need may be.

9. Device as claimed in claim 7, **characterized in that** the crossbar (2) has an attachment for underwater camera (5) that may be moved by motor (61) and drive gear independent of the positioning and movement of the feed dispenser (4).

10. Device as claimed in claim 1, **characterized in that** the crossbar (2) has attachment and motor (42) for at least one cleaning device arranged to clean the seine (8) of the fish cage (1).

11. Device as claimed in claim 1, **characterized in that** the crossbar (2) is arranged via a pivotal attachment (51) to support the central part of a bird-net holder (17), the bird-net holder (17) being arranged over and radially outside the crossbar (2) included the support structure (10, 11) of the crossbar (2).

12. Device as claimed in claim 1, **characterized in that** the automatic length adaptation of the support structure (11) is accomplished by means of a telescopically extendable arm (29).

13. Device as claimed in claim 1, **characterized in that** the rail (3) consists of at least 1 meters straight rail sections hinged together with a mutual angle between 160 and 190 degrees between each of two adjacent rail sections.

14. Device as claimed in any one of claims 6 to 9, **characterized in that** the crossbar (2) has an attachment for a surface camera (31) arranged to be moved by a motor (49) and drive gear independent of the feed dispenser's (4) position and movement.

15. Device as claimed in any one of claims 6 to 9, **characterized in that** the crossbar (2) has attachment for surface camera (31) that can follow the feed dispenser's (4) position and movement.

16. Device as claimed in claim 1, **characterized in that** pulling wires are arranged in a manner allowing them to correct tightness at all times, independent of the fish cage's varying degree of ovality, by means of an automatic adjustable pull attachment (48) connected to a slip friction gear (45) and a motor (44).

17. Method of using a device according to any one of claims 6-9, **characterized in** arranging the feed dispenser (4) linearly moveable on a pivotal crossbar (2) that extends diametrically over the fish cage (1), that the current flow direction in the water is determined, that the crossbar (2) is rotated to a position parallel with the current flow direction in the water, and that the feed dispenser (4) if required is moved along the crossbar (2) to a point where an underwater camera (5) can confirm that the fodder is not carried out of the fish cage by the flowing water.

18. Method as claimed in claim 17, **characterized in that** the flow direction is determined by means of an underwater camera (5) suspended from the crossbar (2).

19. Method as claimed in claim 17, **characterized in that** the feed dispenser (4) is moved to a point higher upstream if an underwater camera (5) shows that fodder pellets are carried out of the seine (8) of the fish cage (1).

20. Method as claimed in claim 17, **characterized in that** the current wind direction is determined by means of a surface camera (31) and that the crossbar (2) by rotation is arranged in a direction parallel with the current wind direction and that the feed dispenser (4) if required is moved along the crossbar to a point where an underwater camera (5) and a surface camera (31) can confirm that the fodder is not carried by the wind out of the fish cage.

## Patentansprüche

1. Vorrichtung zum Halten und Positionieren von Ausrüstungsteilen an einem Fischkäfig (1) mit hauptsächlich kreisförmigem Horizontalquerschnitt und mit einem Schwimmring (7) und einem Wadennetz (8), das direkt oder indirekt am Schwimmring (7) befestigt ist, wobei die Vorrichtung eine Querstange (2) aufweist, die ausgebildet ist, um diametral über dem Fischkäfig (1) angeordnet zu werden, **dadurch gekennzeichnet, dass** die Querstange an jedem Ende eine Trägerstruktur (10 bzw. 11) aufweist, die mit Rädern (26) ausgerüstet ist, welche auf einer Schiene (3) laufen, die ausgebildet ist, um auf dem Schwimmring (7) des Fischkäfigs (1) angeordnet zu werden, wobei die Querstange (2) schwenkbar über dem Fischkäfig (1) angeordnet ist, und zwar durch gleichzeitiges Bewegen der Trägerstrukturen (10, 11) entlang der Schiene (3), wobei die Querstange (2) mit einem automatisch einstellbaren Tragarm (29) versehen ist, um Abweichungen von einer perfekt kreisförmigen Gestalt des Fischkäfigs (1) auszugleichen, wenn die Querstange (2) geschwenkt wird.

2. Vorrichtung nach Anspruch 1, **dadurch gekennzeichnet, dass** die Schiene (3) ein durchgehendes Gleis bildet, das ausgebildet ist, um auf dem Schwimmring (7) befestigt zu werden, wobei die Querstange (2) zwei Trägerstrukturen (10, 11) aufweist, die so angeordnet sind, dass sie diametral einander gegenüberliegend auf dem Gleis stehen, wobei jede mindestens zwei Räder (26) aufweist, wobei die Querstange auch eine Gitterstruktur aufweist, deren Funktion darin besteht, der Querstange Festigkeit zu verleihen, die dieser erlaubt, sich im wesentlichen ohne Rückschwingungen über den Fischkäfig zu erstrecken.

3. Vorrichtung nach Anspruch 2, **dadurch gekennzeichnet, dass** das durchgängige Gleis ausgebildet ist, um an einer Verbindungseinrichtung (68) eines Fischkäfigs mittels einer verstärkten Befestigung (22) befestigt zu werden, wobei die Verbindungseinrichtung (68) angeordnet ist, um den Schwimmring (7) mit einem weiteren inneren Schwimmring (6) eines Fischkäfigs zu verbinden.

4. Vorrichtung nach Anspruch 1, **dadurch gekennzeichnet, dass** die Querstange (2) ein Gitterwerk aus Leichtmetall aufweist, das mit Befestigungen für gewünschte Ausrüstungsteile versehen ist.

5. Vorrichtung nach Anspruch 1, **dadurch gekennzeichnet, dass** die Querstange (2) ausgebildet ist, um mittels Motoren (9) geschwenkt zu werden, die mindestens ein Rad (26) an jeder der Trägerstrukturen (10, 11) antreiben.

6. Vorrichtung nach Anspruch 1, **dadurch gekennzeichnet, dass** die Querstange (2) mit einer Halterung (39) für einen Futterspender (4) versehen ist, wobei die Halterung (39) einen schwenkbar befestigten Drehteller (75) aufweist, der erlaubt, dass die Ausrichtung des Futterspenders (4) unabhängig von der Ausrichtung der Querstange (2) ist.

7. Vorrichtung nach Anspruch 6, **dadurch gekennzeichnet, dass** die Halterung (39) für den Futterspender (4) so angeordnet ist, dass sie durch einen Motor (13) und ein Antriebszahnrad zu einem beliebigen gewünschten Punkt entlang der Querstange bewegt werden kann, wobei ein Schlauch (28) zur Zuführung des Futters zum Futterspender (4) in einer außerhalb des Fischkäfigs (1) befindlichen Aufwicklung (50) angeordnet ist.

8. Vorrichtung nach Anspruch 7, **dadurch gekennzeichnet, dass** die Aufwicklung (50) auf die Größe des Fischkäfigs (1) angepasst ist und dass ein spezieller Motor (41) angeordnet ist, um, je nach Erfordernis, ein Ausgeben und Einziehen des Zuführschlauches (28) für das Futter zu unterstützen.

9. Vorrichtung nach Anspruch 7, **dadurch gekennzeichnet, dass** die Querstange (2) eine Befestigung für eine Unterwasserkamera (5) aufweist, die durch einen Motor (61) und ein Antriebszahnrad unabhängig von der Positionierung und der Bewegung des Futterspenders (4) bewegt werden kann.

10. Vorrichtung nach Anspruch 1, **dadurch gekennzeichnet, dass** die Querstange (2) eine Befestigung und einen Motor (42) für mindestens eine Reinigungsvorrichtung aufweist, die angeordnet ist, um das Wadennetz (8) des Fischkäfigs (1) zu reinigen.

11. Vorrichtung nach Anspruch 1, **dadurch gekennzeichnet, dass** die Querstange (2) mittels einer Schwenkbefestigung (51) angeordnet ist, um den mittleren Teil eines Vogelnetzhalters (17) zu tragen, wobei der Vogelnetzhalter (17) über der und radial außerhalb der Querstange (2) angeordnet ist, und zwar einschließlich der Trägerstruktur (10, 11) der Querstange (2).

12. Vorrichtung nach Anspruch 1, **dadurch gekennzeichnet, dass** die automatische Längenanpassung der Trägerstruktur (11) mittels eines teleskopisch ausfahrbaren Arms (29) bewerkstelligt wird.

13. Vorrichtung nach Anspruch 1, **dadurch gekennzeichnet, dass** die Schiene (3) aus mindestens 1 Meter geradlinig verlaufenden Schienen-Teilstücken besteht, die mit einem Winkel zwischen 160° und 190° zueinander zwischen jeweils zwei benachbarten Schienen-Teilstücken gelenkig verbunden sind.

14. Vorrichtung nach einem der Ansprüche 6 bis 9, **dadurch gekennzeichnet, dass** die Querstange (2) eine Befestigung für eine Oberflächenkamera (31) aufweist, die ausgebildet ist, um durch einen Motor (49) und ein Antriebszahnrad unabhängig von der Positionierung und der Bewegung des Futterspenders (4) bewegt zu werden.

15. Vorrichtung nach einem der Ansprüche 6 bis 9, **dadurch gekennzeichnet, dass** die Querstange eine Befestigung für eine Oberflächenkamera (31) aufweist, die der Position und Bewegung des Futterspenders (4) folgen kann.

16. Vorrichtung nach Anspruch 1, **dadurch gekennzeichnet, dass** Zugdrähte in einer Weise angeordnet sind, die diesen erlaubt, eine Straffheit zu allen Seiten zu korrigieren, unabhängig von einem variierenden Grad an Ovalität des Fischkäfigs, und zwar mittels einer automatisch einstellbaren Zugbefestigung (48), die mit einem Rutschgetriebe (45) und einem Motor (44) verbunden ist.

17. Verfahren zur Verwendung einer Vorrichtung nach einem der Ansprüche 6 bis 9, **dadurch gekennzeichnet, dass** der Futterspender (4) linear beweglich auf einer schwenkbaren Querstange (2) angeordnet wird, die sich diametral über den Fischkäfig (1) erstreckt, dass die aktuelle Strömungsrichtung im Wasser bestimmt wird, dass die Querstange (2) in eine Position parallel zur aktuellen Strömungsrichtung des Wassers rotiert wird, und dass der Futterspender (4), falls erforderlich, entlang der Querstange (2) zu einem Punkt bewegt wird, an dem die Unterwasserkamera (5) bestätigen kann, dass das Futter nicht durch die Wasserströmung aus dem Fischkäfig ausgetragen wird.

18. Verfahren nach Anspruch 17, **dadurch gekennzeichnet, dass** die Strömungsrichtung mittels einer Unterwasserkamera (5) bestimmt wird, die von der Querstange (2) herabhängt.

19. Verfahren nach Anspruch 17, **dadurch gekennzeichnet, dass** der Futterspender (4) zu einem in Strömungsrichtung höher stehenden Punkt bewegt wird, falls eine Unterwasserkamera (5) zeigt, dass Futterpressschrot aus dem Wadennetz (8) des Fischkäfigs (1) ausgetragen wird.

20. Verfahren nach Anspruch 17, **dadurch gekennzeichnet, dass** die aktuelle Windrichtung mittels einer Oberflächenkamera (31) bestimmt wird und dass die Querstange (2) durch Rotation in Richtung parallel zur aktuellen Windrichtung angeordnet wird, und dass der Futterspender (4), falls erforderlich, entlang der Querstange zu einem Punkt bewegt wird, an dem eine Unterwasserkamera (5) und eine Oberflächenkamera (31) bestätigen können, dass das Futter nicht durch den Wind aus dem Fischkäfig ausgetragen wird.

## Revendications

1. Dispositif pour maintenir et positionner un équipement au niveau d'une cage à poisson (1) ayant une section transversale horizontale principalement circulaire avec un anneau flottant (7) et une senne (8) fixée directement ou indirectement à l'anneau flottant (7), ledit dispositif comprenant une traverse (2) adaptée pour être agencée de façon diamétrale d'un bout à l'autre de la cage à poisson (1), **caractérisé en ce que** la traverse, à chaque extrémité, comprend une structure de support (10 resp. 11) équipée de roues (26) circulant sur un rail (3) adapté pour être agencé sur l'anneau flottant (7) de la cage à poisson (1), la traverse (2) étant agencée en pivotement sur la cage à poisson (1) par un déplacement simultané des structures de support (10, 11) le long du rail (3), la traverse (2) étant pourvue d'un bras porteur à ajustement automatique (29) afin de compenser des écarts par rapport à une forme circulaire parfaite de la cage à poisson (1) quand la traverse (2) est pivotée.

2. Dispositif selon la revendication 1, **caractérisé en ce que** le rail (3) forme une voie sur rail continue adaptée pour être fixée sur l'anneau flottant (7), la traverse (2) comprenant deux structures de support (10, 11) qui sont agencées pour se tenir diamétralement opposées l'une à l'autre sur la voie sur rail, comprenant chacune au moins deux roues (26), la traverse comprenant aussi une structure réticulaire dont la fonction est d'offrir une résistance à la traverse lui permettant de s'étendre sur la cage à poisson sans trop balancer en arrière.

3. Dispositif selon la revendication 2, **caractérisé en ce que** la voie sur rail continue est adaptée pour être fixée à un moyen de connexion (68) d'une cage à poisson par le biais d'un élément de fixation renforcé (22), ledit moyen de connexion (68) étant agencé pour connecter ledit anneau flottant (7) à un autre anneau flottant intérieur (6) d'une cage à poisson.

4. Dispositif selon la revendication 1, **caractérisé en ce que** la traverse (2) comprend un ouvrage à claire-voie de métal léger pourvu d'éléments de fixation pour un équipement souhaité.

5. Dispositif selon la revendication 1, **caractérisé en ce que** la traverse (2) est agencée pour être pivotée par des moteurs (9) qui alimentent au moins une roue (26) sur chacune des structures de support (10, 11).

6. Dispositif selon la revendication 1, **caractérisé en ce que** la traverse (2) est pourvue d'un élément de maintien (39) pour un distributeur de nourriture (4), l'élément de maintien (39) ayant une plaque tournante (75) fixée en pivotement qui permet au distributeur de nourriture (4) une orientation indépendante de l'orientation de la traverse (2).

7. Dispositif selon la revendication 6, **caractérisé en ce que** l'élément de maintien (39) pour le distributeur de nourriture (4) est agencé pour être déplacé par un moteur (13) et un engrenage d'entraînement jusqu'à tout point souhaité le long de la traverse (2), un tuyau d'apport (28) pour le fourrage jusqu'au distributeur de nourriture (4) étant agencé en une bobine (50) à l'extérieur de la cage à poisson (1).

8. Dispositif selon la revendication 7, **caractérisé en ce que** la bobine (50) est adaptée à la taille de la cage à poisson (1) et **en ce qu'**un moteur particulier (41) est agencé pour faciliter la poussée vers l'extérieur et la traction vers l'intérieur du tuyau d'apport (28) pour le fourrage, comme cela peut être nécessaire.

9. Dispositif selon la revendication 7, **caractérisé en ce que** la traverse (2) comporte un élément de fixation pour une caméra sous-marine (5) qui peut être déplacée par un moteur (61) et un engrenage d'entraînement indépendamment du positionnement et du déplacement du distributeur de nourriture (4).

10. Dispositif selon la revendication 1, **caractérisé en ce que** la traverse (2) possède un élément de fixation et un moteur (42) pour au moins un dispositif de nettoyage agencé pour nettoyer la senne (8) de la cage à poisson (1).

11. Dispositif selon la revendication 1, **caractérisé en ce que** la traverse (2) est agencée par le biais d'un élément de fixation pivotant (51) pour supporter la partie centrale d'un élément de maintien de filet anti-oiseaux (17), l'élément de maintien de filet anti-oiseaux (17) étant agencé sur et radialement à l'extérieur de la traverse (2), y compris la structure de support (10, 11) de la traverse (2).

12. Dispositif selon la revendication 1, **caractérisé en ce que** l'adaptation de longueur automatique de la structure de support (11) est accomplie au moyen d'un bras télescopiquement extensible (29).

13. Dispositif selon la revendication 1, **caractérisé en ce que** le rail (3) se compose de sections de rail rectilignes d'au moins 1 mètre s'articulant ensemble selon un angle mutuel entre 160 et 190 degrés entre chacune des deux sections de rail adjacentes.

14. Dispositif selon l'une quelconque des revendications 6 à 9, **caractérisé en ce que** la traverse (2) comporte un élément de fixation pour une caméra de surface (31) agencée pour être déplacée par un moteur (49) et un engrenage d'entraînement indépendamment de la position et du déplacement du distributeur de nourriture (4).

15. Dispositif selon l'une quelconque des revendications 6 à 9, **caractérisé en ce que** la traverse (2) comporte un élément de fixation pour une caméra de surface (31) qui peut suivre la position et le déplacement du distributeur de nourriture (4).

16. Dispositif selon la revendication 1, **caractérisé en ce que** des câbles de traction sont agencés d'une manière leur permettant de corriger la compacité tout le temps, indépendamment du degré d'ovalisation variable de la cage à poisson, au moyen d'un élément de fixation à traction à ajustement automatique (48) connecté à un engrenage à friction-glissement (45) et à un moteur (44).

17. Procédé d'utilisation d'un dispositif selon l'une quelconque des revendications 6 à 9, **caractérisé par** l'agencement du distributeur de nourriture (4) linéairement mobile sur une traverse (2) pivotante qui s'étend diamétralement sur la cage à poisson (1), en ce que la direction d'écoulement en cours dans l'eau est déterminée, que la traverse (2) est tournée jusqu'à une position parallèle à la direction d'écoulement en cours dans l'eau, et que le distributeur de nourriture (4), si nécessaire, est déplacé le long de la traverse (2) jusqu'à un point où une caméra sous-marine (5) peut confirmer que le fourrage n'est pas transporté en dehors de la cage à poisson par l'eau qui s'écoule.

18. Procédé selon la revendication 17, **caractérisé en ce que** la direction d'écoulement est déterminée à l'aide d'une caméra sous-marine (5) suspendue à la traverse (2).

19. Procédé selon la revendication 17, **caractérisé en ce que** le distributeur de nourriture (4) est déplacé jusqu'à un point plus haut en amont si une caméra sous-marine (5) montre que des boulettes de fourrage sont transportées à l'extérieur de la senne (8) de la cage à poisson (1).

20. Procédé selon la revendication 17, **caractérisé en ce que** la direction du vent en cours est déterminée au moyen d'une caméra de surface (31) et que la traverse (2) par rotation est agencée dans une direction parallèle à la direction du vent en cours et que le distributeur de nourriture (4), si nécessaire, est déplacé le long de la traverse jusqu'à un point où une caméra sous-marine (5) et une caméra de surface (31) peuvent confirmer que le fourrage n'est pas transporté par le vent à l'extérieur de la cage à poisson.
